# DEMANDE DE BREVET EUROPEEN

(11) **EP 1 428 704 A2**
(43) Date de publication de la demande: **16.06.2004**
(21) Numéro de dépôt: 03292938.2
(22) Date de dépôt: 26.11.2003
(51) Int. Cl.: B60H 1/24

(54) **Dispositif de décompression d'air pour véhicule**

(30) Priorité: 27.11.2002 FR 0214841
(71) Demandeur: Trelleborg Fluid Systems Geie, 44470 Carquefou (FR)
(72) Inventeur: Orieux, André, 44860 Saint-Aignan de Grand Lieu (FR)
(74) Mandataire: Fosse, Danièle

(57) **Abrégé**

L'invention concerne un dispositif (1) de décompression d'air pour véhicule, en vue d'assurer l'équilibrage de la pression entre le volume intérieur et le milieu ambiant d'un véhicule, en particulier lors de la manoeuvre d'ouvrant, ledit dispositif (1) comprenant au moins un corps (2) rigide délimitant au moins une ouverture (3) de passage d'air et au moins un volet (4) obturateur articulé audit corps (2), ce volet (4) obturateur étant rappelé sous l'effet de son propre poids dans une position de repos dans laquelle il ferme de manière étanche ladite ouverture (3) en s'appliquant en particulier contre les bords (5) de ladite ouverture (3), au moins une partie des zones du corps (2) et du volet (4), susceptibles de venir en contact d'appui en position de repos du volet (4), étant moulées par injection et respectivement réalisées en un matériau de même nature, de préférence identique.

Ce dispositif est caractérisé en ce que ce matériau est un matériau insonore, souple, de dureté inférieure à 90 shore A en vue d'absorber les bruits résultant dudit contact.

## Description

La présente invention concerne un dispositif de décompression d'air pour véhicule, en vue d'assurer l'équilibrage de la pression entre le volume intérieur et le milieu ambiant d'un tel véhicule, en particulier lors de la manoeuvre d'ouvrant.

De tels dispositifs sont particulièrement bien connus à ceux versés dans cet art. Ces dispositifs comprennent en général au moins un corps rigide se présentant sous forme d'un cadre délimitant au moins une ouverture de passage d'air et au moins un volet obturateur articulé au corps. Ce volet obturateur est rappelé sous l'effet de son propre poids dans une position de repos dans laquelle il ferme, de manière étanche, l'ouverture de passage d'air, en s'appliquant en particulier contre les bords de ladite ouverture.

Lors de la manoeuvre d'un ouvrant d'un véhicule et en particulier lors de la fermeture d'une porte, le dispositif incorporé dans une paroi de l'habitacle permet un passage d'air en direction de l'extérieur pour assurer la décompression de l'habitacle. A l'inverse, quand l'habitacle est en dépression, le dispositif garantit une parfaite étanchéité de l'habitacle et empêche toute entrée d'air depuis l'extérieur.

De nombreuses solutions ont été imaginées pour la réalisation d'un tel dispositif. Ces solutions ont tenté de simplifier la conception d'un tel dispositif, en particulier de manière à limiter le nombre d'éléments constituant un tel dispositif.

Ainsi, le brevet européen EP-A-0.912.357 décrit un système de ventilation forcée pour l'équilibrage de la pression entre le volume intérieur et le milieu ambiant d'un véhicule automobile du type dans lequel le cadre, délimitant l'ouverture fermée par un clapet d'aération plan, est réalisé en un matériau dur tandis que le clapet d'aération, moulé par injection sur le cadre, est réalisé en une matière élastomère ou élastomère thermoplastique (TPE). Par ailleurs, l'ouverture est divisée au moyen d'entretoises réalisées en une matière plastique dure identique à celle du cadre. Il en résulte, au niveau du cadre et des entretoises, un contact matériau dur/matériau élastomère ou élastomère thermoplastique (TPE) avec le clapet engendrant, à chaque contact du clapet avec le cadre, un bruit sec désagréable pour les occupants du véhicule.

Cette même caractéristique d'une zone de contact matériau dur/matériau souple entre clapet et cadre est décrite dans le brevet US-A-5.194.038 ainsi que dans le brevet français FR-A-2.792.869.

Elle est également décrite dans le brevet allemand DE-A-10052003. Dans ce document, le cadre est réalisé d'une seule pièce par moulage par injection d'un premier composant dur tandis que le volet est réalisé en un matériau plus souple.

Le brevet allemand DE-A-19905036 décrit un dispositif de décompression d'air dans lequel les surfaces de contact du cadre et du volet présentent une géométrie autorisant un appui réduit en section transversale. Ainsi, le cadre 2 présente des surfaces arrondies ou coniques pour réduire la surface des zones en contact entre volet 3 et cadre 2. Ce brevet évoque la possibilité de réaliser les surfaces en contact du volet et du cadre dans un même matériau, ces surfaces étant réalisées sous forme d'un moulage par injection. Toutefois, aucun lien n'est établi entre la nature du matériau constitutif des surfaces d'appui et la possibilité d'obtenir une atténuation des bruits résultant du contact entre volet et cadre.

Dans le brevet EP-A-0.467.095, clapet et cadre sont réalisés en un matériau dur et sont formés d'une seule pièce tandis qu'une grille, réalisée également en matériau dur, est rapportée. Dans ce cas, le contact matériau dur/matériau dur entre volet et cadre est à nouveau extrêmement bruyant.

Enfin, le brevet EP-A-0.728.605 décrit à nouveau un ensemble de soupape d'extracteur d'air dans lequel le volet est relié au cadre par une première bande formée à partir d'une matière thermoplastique tandis qu'une deuxième bande de matière thermoplastique élastique et flexible, positionnée sur le volet ou sur le cadre, agit comme joint d'étanchéité entre le volet et le cadre. Il en résulte à nouveau un contact matériau souple/matériau dur entre cadre et volet.

Les solutions connues à ce jour engendrent donc un bruit important du dispositif lors d'un déplacement du volet de la position ouverte vers la position fermée et sa venue en contact avec le corps du dispositif, ce claquement se substituant aux inconvénients qui seraient dus à une absence de décompression.

Un but de la présente invention est donc de proposer un dispositif de décompression d'air pour véhicule dont la conception permet d'absorber les bruits résultant du contact entre volet obturateur et corps du dispositif de manière à obtenir une manoeuvre la plus silencieuse possible du volet lors de son contact avec le corps du dispositif.

A cet effet, l'invention a pour objet un dispositif de décompression d'air pour véhicule, en vue d'assurer l'équilibrage de la pression entre le volume intérieur et le milieu ambiant d'un véhicule, en particulier lors de la manoeuvre d'ouvrant, ledit dispositif comprenant au moins un corps rigide délimitant au moins une ouverture de passage d'air et au moins un volet obturateur articulé audit corps, ce volet obturateur étant rappelé sous l'effet de son propre poids dans une position de repos dans laquelle il ferme de manière étanche ladite ouverture en s'appliquant en particulier contre les bords de ladite ouverture, au moins une partie des zones du corps et du volet, susceptibles de venir en contact d'appui en position de repos du volet, étant moulées par injection et respectivement réalisées en un matériau de même nature, de préférence identique, caractérisé en ce que ce matériau est un matériau insonore, souple, de dureté inférieure à 90 shore A en vue d'absorber les bruits résultant dudit contact.

La réalisation d'au moins une partie des zones du corps et du volet destinées à venir en contact d'appui au moyen d'un matériau souple insonore aux caractéristiques de dureté spécifiques permet d'absorber les bruits résultant du contact entre lesdites zones.

L'invention sera bien comprise à la lecture de la description suivante d'exemples de réalisation, en référence aux dessins annexés dans lesquels :
la figure 1 représente une vue de face accompagnée de deux vues en coupe d'un dispositif conforme à l'invention en position ouverte du volet ;
la figure 2 représente une vue de face accompagnée de deux vues en coupe du dispositif de la figure 1 en position fermée du volet ;
la figure 3 représente une vue de face accompagnée de deux vues en coupe d'un autre mode de réalisation d'un dispositif conforme à l'invention en position ouverte du volet ;
la figure 4 représente une vue de face accompagnée de deux vues en coupe du dispositif de la figure 3 en position fermée du volet ;
la figure 5 représente une vue de face et deux vues en coupe d'un autre mode de réalisation du dispositif conforme à l'invention ;
la figure 6 représente une vue en coupe d'un autre mode de réalisation du dispositif conforme à l'invention accompagnée d'une vue de détail des zones en contact d'appui du volet et du cadre ;
la figure 7 représente une vue en coupe accompagnée d'une vue de détail d'un autre mode de réalisation du dispositif conforme à l'invention et
la figure 8 représente une vue en coupe accompagnée d'une vue de détail d'un autre mode de réalisation du dispositif conforme à l'invention.

Comme mentionné ci-dessus, le dispositif 1 de décompression d'air, objet de l'invention, est destiné à assurer l'équilibrage de pression entre le volume intérieur, en particulier l'habitacle, et l'air ambiant d'un véhicule.

Un tel dispositif est constitué, de manière en soi connue, d'un corps 1 rigide se présentant généralement sous forme d'un cadre délimitant au moins une ouverture 3 de passage d'air. Dans les exemples représentés, ce corps 1 délimite deux ouvertures 3 de passage d'air. Chaque ouverture 3 de passage d'air est apte à être fermée au moyen d'un volet 4 obturateur articulé audit corps 2 et susceptible de fermer, dans une position dite de repos, ladite ouverture de manière étanche. Ce corps 2 et le ou les volet(s) 4 peuvent ainsi être logés à l'intérieur d'une ouverture ménagée dans une paroi du véhicule. La fixation du corps 2 peut s'effectuer par différents moyens et en particulier par clipsage à l'aide de pattes ménagées sur la périphérie dudit corps 2. L'ensemble est ainsi logé de manière telle que chaque volet, sous l'effet de son propre poids, est rappelé dans une position dite de repos dans laquelle il s'applique en particulier contre les bords de l'ouverture 3 de passage d'air et ferme celle-ci. Lors d'une augmentation de la pression d'air à l'intérieur de l'habitacle liée notamment à la fermeture d'un ouvrant, tel qu'une portière, les volets obturateurs tendent, au cours de la manoeuvre de l'ouvrant, à s'écarter du corps pour permettre un passage d'air de l'habitacle en direction du milieu extérieur.

De manière caractéristique à l'invention, en vue de réduire le bruit résultant de l'appui du volet sur le corps, en particulier lorsque le dispositif est soumis à des vibrations ou lorsque le volet passe d'une position ouverte à une position fermée, les zones du corps et du volet, susceptibles de venir en contact d'appui en position de repos du volet, sont respectivement réalisées en un matériau de même nature, de préférence identique, insonore, souple, de dureté inférieure à 90 shore A de manière à absorber les bruits résultant dudit contact.

Dans les exemples représentés, au moins la zone 5 périphérique de l'ouverture 3 du corps 2 constituant un siège du volet et le pourtour 6 du volet sont réalisés en un matériau insonore, souple, de dureté inférieure à 90 shore A.

A titre de matériau souple insonore, on peut par exemple citer les matériaux appartenant à la famille des composés caoutchouc tels que l'EPDM, des composés élastomères thermoplastiques tels que le SEBS ou le PP-EPDM.

Sur la base de ce principe, divers modes de réalisation peuvent être envisagés.

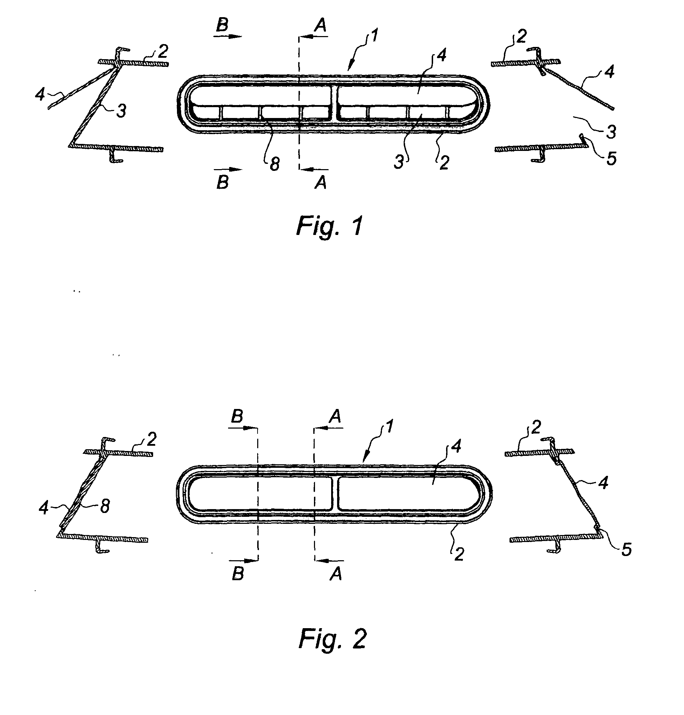

Les figures 1 à 8 illustrent quelques modes de réalisation de l'invention. Dans les figures 1 à 5, à chaque fois, le volet 4 est surmoulé sur le corps 2. Dans l'exemple de réalisation représenté aux figures 1 et 2, la totalité du volet 4 est réalisée en un matériau souple insonore. Ce volet 4 vient reposer sur un siège 5 du corps 2 constitué par la zone périphérique de l'ouverture, ce siège affectant éventuellement la forme d'une feuillure. Cette zone 5 est également réalisée en un matériau souple insonore. Ces zones de contact d'appui du corps 2 et du volet 4 sont réalisées en un matériau identique et sont moulées par injection lors d'une même opération de moulage.

Par ailleurs, dans les exemples représentés, chaque ouverture 3 de passage d'air est compartimentée par l'intermédiaire d'entretoises 8. Ainsi, dans ce cas, au moins une partie des zones du corps 2, susceptibles de constituer des surfaces de contact d'appui du volet 4 obturateur et réalisées en un matériau souple insonore, se présentent sous forme d'entretoise 8 compartimentant la ou les ouverture(s) 3 de passage d'air.

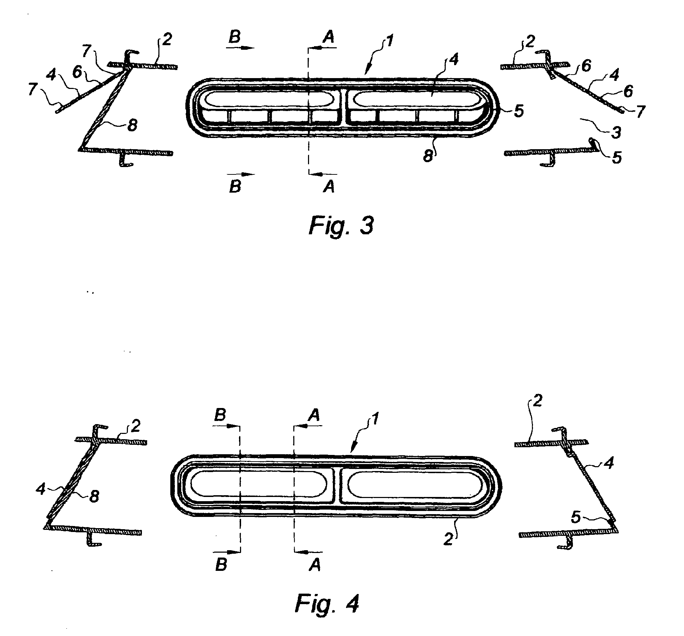

L'exemple de réalisation représenté aux figures 3 et 4 se différencie de l'exemple de réalisation représenté aux figures 1 et 2 par la conception du volet 4. Dans ce cas, le volet 4 est constitué d'une âme 7 réalisée en un matériau dur bordée d'un rebord 6 réalisé en un matériau souple. L'âme 7 du volet 4 obturateur est réalisée lors d'une même opération de moulage que le corps 2 du dispositif tandis que le rebord 6 du volet 4 est réalisé en un matériau identique et lors d'une même opération de moulage que la zone 5 périphérique de l'ouverture 3 servant de siège au volet 4 et en particulier au rebord 6 réalisé en un matériau souple du volet. Ainsi, les zones les plus bruyantes lors d'un contact entre volet 4 et corps 2 sont à nouveau réalisées respectivement en un matériau souple insonore.

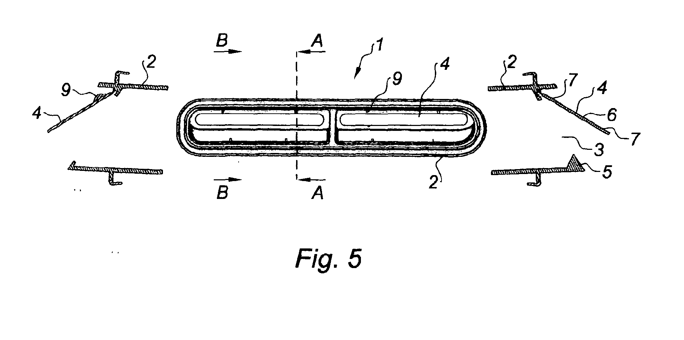

L'exemple représenté à la figure 5 se distingue du mode de réalisation représenté aux figures 3 et 4 par la suppression des entretoises 8. Cette solution présente l'avantage d'augmenter l'aérolique de l'ensemble.

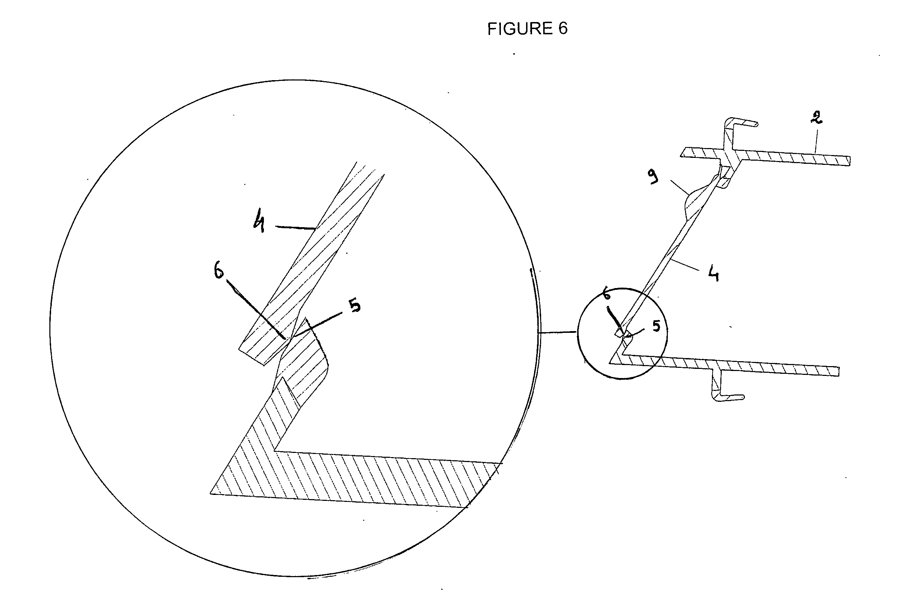

Pour accroître encore l'effet d'atténuation de bruit obtenu, le pourtour 6 du volet 4 peut comporter, sur sa face tournée vers le corps 2, un renflement à sommet aigu, la pointe dudit sommet constituant la zone d'appui du volet 4 sur le corps 2, en particulier sur la zone 5 périphérique de l'ouverture 3 du corps 2. Cet exemple est plus particulièrement représenté à la figure 6.

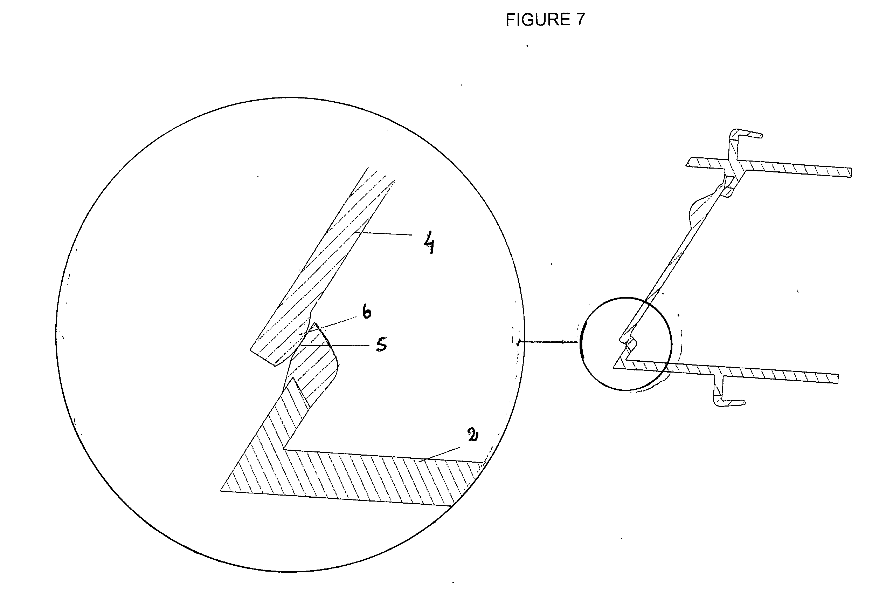

Dans la figure 7, le pourtour 6 du volet 4 comporte à nouveau, sur sa face tournée vers le corps 2, un renflement à sommet arrondi, la cime dudit sommet constituant la zone d'appui du volet 4 sur le corps 2, en particulier sur la zone 5 périphérique de l'ouverture 3 du corps 2.

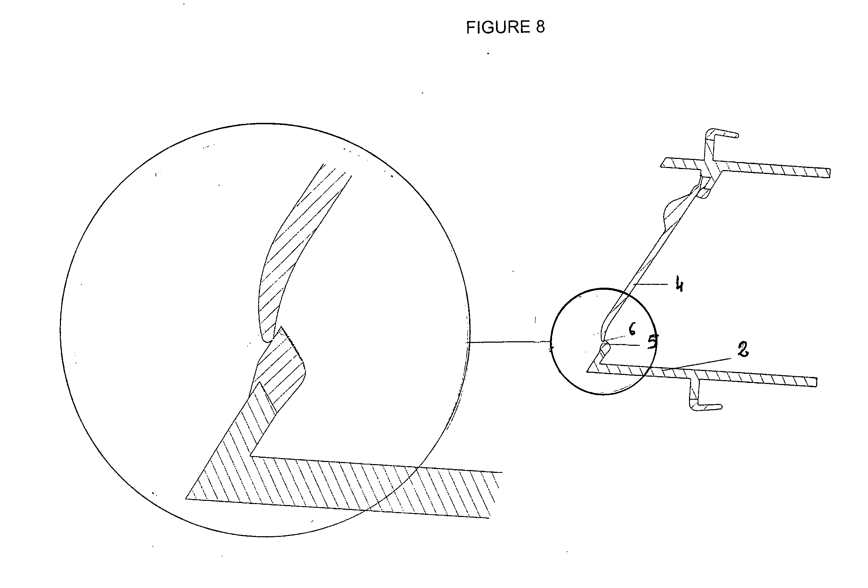

Dans un autre mode de réalisation, représenté à la figure 8, le pourtour 6 du volet 4 est recourbé en direction du corps 2 et présente une épaisseur décroissante en direction du bord libre dudit volet 4 de manière à venir en appui sur le corps 2 par ledit bord libre formant l'équivalent d'une arête. Dans cet exemple, on combine à la fois trois éléments qui concourent à une atténuation des bruits, à savoir d'une part la nature des matériaux souples insonores de dureté inférieure à 90 shore A des zones du volet 4 et du corps 2 en contact d'appui, l'épaisseur décroissante du volet 4 qui confère au bord du volet un effet amortisseur favorisant une atténuation des bruits et la réduction de la surface de contact entre le volet 4 et le corps 2, cette surface de contact étant limitée à une simple arête de manière à nouveau à conférer une atténuation supplémentaire des bruits.

Pour parfaire les modes de réalisation représentés, le corps 2 peut être équipé d'une butée 9 limitant la course d'ouverture du volet 4 obturateur. Cette limitation de la course réduit la valeur des forces en présence lors d'un contact entre volet 4 et corps 2. Il en résulte une atténuation des bruits engendrés.

## Revendications

1. Dispositif (1) de décompression d'air pour véhicule, en vue d'assurer l'équilibrage de la pression entre le volume intérieur et le milieu ambiant d'un véhicule, en particulier lors de la manceuvre d'ouvrant, ledit dispositif (1) comprenant au moins un corps (2) rigide délimitant au moins une ouverture (3) de passage d'air et au moins un volet (4) obturateur articulé audit corps (2), ce volet (4) obturateur étant rappelé sous l'effet de son propre poids dans une position de repos dans laquelle il ferme de manière étanche ladite ouverture (3) en s'appliquant en particulier contre les bords (5) de ladite ouverture (3), au moins une partie des zones du corps (2) et du volet (4), susceptibles de venir en contact d'appui en position de repos du volet (4), étant moulées par injection et respectivement réalisées en un matériau de même nature, de préférence identique,
**caractérisé en ce que** ce matériau est un matériau insonore, souple, de dureté inférieure à 90 shore A en vue d'absorber les bruits résultant dudit contact.

2. Dispositif (1) de décompression d'air selon la revendication 1,
**caractérisé en ce qu'**au moins la zone (5) périphérique de l'ouverture (3) du corps (2) constituant un siège du volet (4) et le pourtour (6) du volet (4) sont réalisés en un matériau insonore de dureté inférieure à 90 shore A en vue d'absorber les bruits résultant dudit contact.

3. Dispositif (1) de décompression d'air selon la revendication 2,
**caractérisé en ce que** le pourtour (6) du volet (4) comporte, sur sa face tournée vers le corps (2), un renflement à sommet aigu, la pointe dudit sommet constituant la zone d'appui du volet (4) sur le corps (2), en particulier sur la zone (5) périphérique de l'ouverture (3) du corps (2).

4. Dispositif (1) de décompression d'air selon la revendication 2,
**caractérisé en ce que** le pourtour (6) du volet (4) comporte, sur sa face tournée vers le corps (2), un renflement à sommet arrondi, la cime dudit sommet constituant la zone d'appui du volet (4) sur le corps (2), en particulier sur la zone (5) périphérique de l'ouverture (3) du corps (2).

5. Dispositif (1) de décompression d'air selon la revendication 2,
**caractérisé en ce que** le pourtour (6) du volet (4) est recourbé en direction du corps (2) et présente une épaisseur décroissante en direction du bord libre dudit volet (4) de manière à venir en appui sur le corps (2) par ledit bord libre formant l'équivalent d'une arête.

6. Dispositif (1) de décompression d'air selon l'une des revendications 1 à 5,
**caractérisé en ce que** le volet (4) est surmoulé sur le corps (2).

7. Dispositif (1) de décompression d'air selon l'une des revendications 1 à 6,
**caractérisé en ce qu'**au moins une partie des zones de contact d'appui du corps (2) et du volet (4), réalisées en un matériau identique, sont moulées par injection lors d'une même opération de moulage.

8. Dispositif (1) de décompression d'air selon l'une des revendications 1 à 7,
**caractérisé en ce que** l'âme (7) du volet (4) obturateur est réalisée lors d'une même opération de moulage que le corps (2) du dispositif.

9. Dispositif (1) de décompression d'air selon l'une des revendications 1 à 8,
**caractérisé en ce que** la totalité du volet (4) est réalisée en un matériau souple insonore de dureté inférieure à 90 shore A.

10. Dispositif (1) de décompression d'air selon l'une des revendications 1 à 9,
**caractérisé en ce qu'**au moins une partie des zones du corps (2), susceptibles de constituer des surfaces de contact d'appui du volet (4) obturateur et réalisées en un matériau souple insonore, de dureté inférieure à 90 shore A, se présentent sous forme d'entretoise (8) compartimentant la ou les ouverture(s) (3) de passage d'air.

11. Dispositif (1) de décompression d'air selon l'une des revendications 1 à 7,
**caractérisé en ce que** le corps (2) est équipé d'une butée (9) limitant la course d'ouverture du volet (4) obturateur.
